# EUROPEAN PATENT APPLICATION

(11) **EP 4 507 024 A1**
(43) Date of publication of application: **12.02.2025**
(21) Application number: 23884395.7
(22) Date of filing: 23.08.2023
(51) Int. Cl.: H01M 4/136, H01M 4/1397, H01M 4/36, H01M 4/58, H01M 10/0525

(54) **COMPOSITE ELECTRODE AND PREPARATION METHOD THEREFOR, BATTERY AND ELECTRIC DEVICE**

(30) Priority: 03.11.2022 CN 202211396687
(71) Applicant: Contemporary Amperex Technology Co., Limited, Ningde, Fujian 352100 (CN)
(72) Inventor: DING, Youcai, Ningde, Fujian 352100 (CN); GAO, Pengfei, Ningde, Fujian 352100 (CN); LI, Yanpeng, Ningde, Fujian 352100 (CN); WU, Yizhen, Ningde, Fujian 352100 (CN)
(74) Representative: Ziebig Hengelhaupt Intellectual Property Attorneys Patentanwaltskanzlei PartGmbB
(86) International application number: PCT/CN2023/114473
(87) International publication number: WO 2024/093458

(57) **Abstract**

This application relates to the technical field of batteries, and in particular, to a composite electrode and a preparation method thereof, a battery, and an electrical device. The composite electrode includes a current collector, a first active layer, and a second active layer. The first active layer is disposed on the current collector. The second active layer is disposed on one side, oriented away from the current collector, of the first active layer. The first active layer includes a lithium manganese iron phosphate material. At least a part of a surface of the lithium manganese iron phosphate material is coated with a conductive coating material. A mass of the conductive coating material is 1% to 10% of a mass of the lithium manganese iron phosphate material. The conductivity of the lithium manganese iron phosphate material is improved by the conductive coating material. The second active layer disposed on one side, oriented away from the current collector, of the first active layer, reduces the risk of direct contact between an electrolyte solution and the lithium manganese iron phosphate material coated with the conductive coating material in the first active layer, reduces a risk of catalytic decomposition of the electrolyte solution at a high potential, alleviates the problems of gas production reactions and battery cell swelling, and alleviates capacity fading while improving the conductivity of the composite electrode.

## Description

### CROSS-REFERENCE TO RELATED APPLICATIONS

This application claims priority to Chinese Patent Application No. 202211396687.6, filed on November 3, 2022, which is incorporated herein by reference in its entirety.

### TECHNICAL FIELD

This application relates to the technical field of lithium-ion batteries, and in particular, to a composite electrode and a preparation method thereof, a battery, and an electrical device.

### BACKGROUND

Currently, two main types of positive electrode materials are commercially available for a lithium-ion battery: a ternary lithium-containing compound, and lithium iron phosphate. The advantages of the ternary material include a high energy density suitable for long-range vehicles, but the disadvantage is that elements such as cobalt and nickel are relatively expensive and are more prone to safety hazards such as thermal runaway and fire. Compared with ternary materials, lithium iron phosphate is much safer, and is more cost-effective due to absence of rare transition metal elements. However, the energy density of the lithium iron phosphate is relatively low, thereby resulting in a short driving range. In view of the above situation, it is of great significance to develop a material characterized by a high energy density, cost-effectiveness, and high safety. Lithium manganese iron phosphate is such a new material.

The crystal structure of the lithium manganese iron phosphate material is the same as that of lithium iron phosphate, both exhibiting an olivine crystal form. The lithium manganese iron phosphate material differs in that Mn atoms replace a part of Fe atoms on the basis of lithium iron phosphate. In contrast to the lithium iron phosphate, the energy density of the lithium manganese iron phosphate material is increased significantly, but with safety unimpaired and almost equivalent to the safety of lithium iron phosphate. However, the conductivity of the lithium manganese iron phosphate material is not high.

### SUMMARY

A main objective of this application is to provide a composite electrode to improve comprehensive performance of the electrode.

To achieve the above objective, this application discloses a composite electrode. The composite electrode includes a current collector, a first active layer, and a second active layer. The first active layer is disposed on the current collector. The second active layer is disposed on one side, oriented away from the current collector, of the first active layer. The first active layer includes a lithium manganese iron phosphate material. At least a part of a surface of the lithium manganese iron phosphate material is coated with a conductive coating material. A mass of the conductive coating material is 1.0% to 10.0% of a mass of the lithium manganese iron phosphate material.

Optionally, the mass of the conductive coating material is 1% to 5% of the mass of the lithium manganese iron phosphate material.

A larger amount of the conductive coating material applied leads to higher conductivity, and in turn, higher C-rate performance of the battery. However, if the content of the conductive coating material is further increased, the actual content of the active material is reduced, and the energy density of the electrode is impaired. Therefore, the mass of the conductive coating material is set to be 1.0% to 5%, for example, 1.0%, 2.0%, 3.0%, 4.0%, 5.0%, or a value falling within a range formed by any two thereof, of the mass of the lithium manganese iron phosphate material.

Optionally, the mass of the conductive coating material is 1.3% to 2.5% of the mass of the lithium manganese iron phosphate material.

When the mass of the conductive coating material is 1.3% to 2.5% of the mass of the lithium manganese iron phosphate material, the performance of the battery is relatively high. Therefore, the mass of the conductive coating material is 1.3% to 2.5% of the mass of the lithium manganese iron phosphate material, for example, may be 1.3%, 1.5%, 1.8%, 2.0%, 2.3%, 2.5%, or a value falling within a range formed by any two thereof, of the mass of the lithium manganese iron phosphate material.

Optionally, the conductive coating material is a carbon material.

With the carbon material being used as the conductive coating material, the porous carbon used as the coating material contains defects and an oxygen-containing functional group. The defects and the oxygen-containing functional group can catalyze the decomposition of the electrolyte solution. At least a part of the surface of the lithium manganese iron phosphate material is coated with a carbon material. The carbon material improves the conductivity of the lithium manganese iron phosphate material. The active layer containing the lithium manganese iron phosphate material is disposed in the inner layer, and the remaining active layer is disposed in the outer layer. In this way, the active layer containing the lithium manganese iron phosphate material is prevented from being directly exposed outside in a large area, thereby alleviating the problem that the lithium manganese iron phosphate material coated with the carbon material catalyzes decomposition of the electrolyte solution at a high potential under a high-conductivity condition. The disposed laminar active layer can increase the coating weight of the carbon material on at least a part of the surface of the lithium manganese iron phosphate material, and improve the conductivity of the lithium manganese iron phosphate material, thereby solving the problem of deficient conductivity caused by the small amount of conductive carbon added according to a conventional formula.

A larger amount of the conductive coating material applied leads to higher conductivity, and in turn, higher C-rate performance of the battery. However, if the content of the conductive coating material is further increased, the actual content of the active material is reduced, and the energy density of the electrode is impaired. Therefore, the mass of the conductive coating material is set to be 1.0% to 10.0%, for example, 1.0%, 2.0%, 3.0%, 4.0%, 5.0%, 6.0%, 7.0%, 8.0%, 9.0%, 10.0%, or a value falling within a range formed by any two thereof, of the mass of the lithium manganese iron phosphate material.

Optionally, the composite electrode further includes a third active layer, and the third active layer is disposed between the current collector and the first active layer; and/or the composite electrode further includes a fourth active layer, and the fourth active layer is disposed between the first active layer and the second active layer.

In this application, on the basis of satisfying that the second active layer covers the first active layer, the composite electrode further includes a third active layer 4. The third active layer is disposed between the current collector 1 and the first active layer 2, thereby also achieving the above effect, where the material of the third active layer is not limited.

It is also understandable that the composite electrode further includes a fourth active layer 5. The fourth active layer is disposed between the first active layer 2 and the second active layer 3, thereby also achieving the above effect, where the material of the fourth active layer 5 is not limited.

Optionally, the second active layer is disposed on a lateral peripheral surface of the first active layer.

Understandably, the more the area of the first active layer 2 is covered, the smaller the direct contact area between the lithium manganese iron phosphate material in the first active layer and the electrolyte solution will be. In order to further reduce the direct contact between the lithium manganese iron phosphate material in the first active layer and the electrolyte solution, the second active layer is made to cover the first active layer. In other words, the second active layer covers all the exposed structure of the first active layer. For example, the second active layer not only covers the surface of the first active layer, but also covers the lateral peripheral surface of the first active layer.

Optionally, the first active layer further includes a ternary material. The mass of the lithium manganese iron phosphate material is 20% to 80% of a total mass of the first active layer.

In order to improve the energy density of the composite electrode, the first active layer further includes a ternary material, and the mass of the lithium manganese iron phosphate material is 20% to 80% of the total mass of the first active layer. For example, the mass of the lithium manganese iron phosphate material may be 20%, 30%, 40%, 50%, 60%, 70%, or 80% of the total mass of the first active layer. The mass of the lithium manganese iron phosphate material needs to avoid being overly low or overly high. An overly low mass of the lithium manganese iron phosphate material leads to an overly high mass of the ternary material, and reduces the stability of the battery. An overly high mass of the lithium manganese iron phosphate material leads to an overly low mass of the ternary material, and results in a deficient energy density.

Optionally, an average particle diameter Dᵥ₅₀ of the lithium manganese iron phosphate material is 0.2 µm to 1 µm.

The ion conductivity of the lithium manganese iron phosphate material is very low. Oversized particles lead to a long transmission path of lithium ions and low kinetic performance. Undersized particles achieve high kinetic performance but lead to low processability and make it difficult to apply the material onto the current collector. Therefore, the average particle diameter Dᵥ₅₀ of the lithium manganese iron phosphate material may be 0.2 µm, 0.3 µm, 0.4 µm, 0.5 µm, 0.6 µm, 0.7 µm, 0.8 µm, 0.9 µm, 1 µm, or a value falling within a range formed by any two thereof.

Optionally, a general structural formula of the lithium manganese iron phosphate material is LiMnₓFe_{y}M_{1-x-y}PO₄, where 0.2 ≤ x ≤ 0.8; 0.1 ≤ y ≤ 0.5; 0 ≤1 - x - y <_ 0.2; and M represents a doping element, and optionally includes at least one of Al, Cu, Mg, Zn, Ni, Ti, V, Zr, Co, Ga, Sn, Sb, Nb, or Ge.

The general structural formula of the lithium manganese iron phosphate material is LiMnₓFe_{y}M_{1-x-y}PO₄, where 0.2 ≤ x ≤ 0.8; 0.1 ≤ y ≤ 0.5; 0 ≤1 - x - y ≤ 0.2; and M represents a doping element, and optionally includes at least one of Al, Cu, Mg, Zn, Ni, Ti, V, Zr, Co, Ga, Sn, Sb, Nb, or Ge, which means that the molar percent of manganese in the lithium manganese iron phosphate material is 20% to 80%, thereby contributing to relatively high performance. For example, the molar percent of manganese in the lithium manganese iron phosphate material may be 20%, 30%, 40%, 50%, 60%, 70%, 80%, or a value falling within a range formed by any two thereof.

Optionally, a thickness of the first active layer is 20% to 80% of a total thickness of the active layers.

The first active layer includes a lithium manganese iron phosphate material, and the thickness of the first active layer is 20% to 80%, for example, 20%, 30%, 40%, 50%, 60%, 70%, 80%, or a value falling within a range formed by any two thereof, of the total thickness of the active layers. The thickness of the lithium manganese iron phosphate material needs to avoid being overly low or overly high. For example, when other active layers include a ternary material, an overly low thickness of the lithium manganese iron phosphate material leads to an overly high thickness of the ternary material, and reduces the stability of the battery. An overly high thickness of the lithium manganese iron phosphate material leads to an overly low thickness of the ternary material, and results in a deficient energy density.

Optionally, a compaction density of the second active layer is greater than a compaction density of the first active layer.

With the increase of the compaction density, the volume density of the active layer increases, the porosity decreases, the specific surface area increases, the contact resistance decreases, a solid electrolyte interface (SEI) film resistance of the electrode decreases, and the charge transfer resistance decreases. A relatively low compaction density causes the problem of a low specific discharge capacity instead. A main reason is that the relatively high porosity causes some particles to be in an insulated state and unable to participate in charging and discharging. In contrast, the electrode of a high compaction density possesses a higher break strength, thereby reducing the risk that the electrode particles fall off and become insulated particles during cycling. A high compaction density can significantly make the distribution of the pore size and pores of the electrode more uniform, make the distribution of the conductive agent and the binder more uniform, reduce the contact resistance and charge transfer resistance of the electrode, and increase the active area that can participate in reactions, thereby significantly improving the electrochemical performance of the material. Therefore, the compaction density of the active layer needs to be appropriate so as to improve the performance of the active layer. Considering that the first active layer includes the lithium manganese iron phosphate material and the second active layer includes a ternary material, based on the inherent structural characteristics of the lithium manganese iron phosphate material and the ternary material, the compaction density of the second active layer is greater than the compaction density of the first active layer.

Optionally, the compaction density of the second active layer is 3.0 g/cm³ to 4.5 g/cm³, and the compaction density of the first active layer is 2.2 g/cm³ to 3.0 g/cm³.

The first active layer includes the lithium manganese iron phosphate material. Based on the inherent structural characteristics of the lithium manganese iron phosphate material, the compaction density of the first active layer is 2.2 g/cm³ to 3.0 g/cm³. The resulting composite electrode is of desirable application value when the compaction density of the first active layer falls within such a range. The second active layer includes a ternary material. Based on the structural characteristics of the ternary material, the compaction density of the second active layer is 3.0 g/cm³ to 4.5 g/cm³. The resulting composite electrode is of desirable application value when the compaction density of the second active layer falls within such a range.

Optionally, the second active layer includes at least one of a ternary material or lithium cobalt oxide.

Lithium cobalt oxide is an inorganic compound represented by a chemical formula LiCoO₂, and is typically used as a positive electrode material of a lithium-ion battery.

Due to the low compaction density of lithium manganese iron phosphate, the amount of active material applied on the substrate per unit area is smaller, and ultimately, the overall energy density is not obviously superior to that of the LFP system. In contrast, the gravimetric capacity and compaction density of the ternary material are generally high. By adjusting the mass percentages of the materials in the first active layer and the second active layer, this application can adjust and control the energy density of the composite electrode to achieve a battery cell characterized by high stability, high energy density, and cost-effectiveness.

For this purpose, the second active layer includes at least one of a ternary material or lithium cobalt oxide. For example, the second active layer may include a ternary material or lithium cobalt oxide. Alternatively, the second active layer may further include a mixture of a ternary material and lithium cobalt oxide, without being particularly limited herein. Definitely, the second active layer may include other materials applicable to a positive electrode in addition to the ternary material and lithium cobalt oxide.

Optionally, an average particle diameter Dᵥ₅₀ of the ternary material or the lithium cobalt oxide included in the second active layer is 0.5 µm to 20 µm.

Understandably, oversized particles lead to a long transmission path of lithium ions and low kinetic performance. Undersized particles achieve high kinetic performance but lead to low processability and make it difficult to apply the material onto the current collector. Therefore, the average particle diameter Dᵥ₅₀ of the ternary material or lithium cobalt oxide in the second active material may be 0.5 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or a value falling within a range formed by any two thereof.

Optionally, when the second active layer includes the ternary material, a general structural formula of the ternary material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0≤b ≤ 0.35, and 0 ≤1 - a - b ≤ 0.35.

A general structural formula of the ternary material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 ≤ 1 - a - b ≤ 0.35. Depending on the nickel content, the ternary material is categorized into a low-nickel ternary material, a medium-nickel ternary material, and a high-nickel ternary material. Depending on whether the material contains cobalt, the ternary material may be categorized into a cobalt-containing ternary material and a cobalt-free ternary material, where the cobalt may be replaced by another metal element. The type of the ternary material is not particularly limited herein.

Optionally, when the first active layer includes the ternary material, the ternary material in the first active layer is identical to the ternary material in the second active layer.

Theoretically, the ternary material in the first active layer may be identical to or different from the ternary material in the second active layer, but preferably identical. When the ternary material is identical, the advantage is that the amount of intercalated lithium of the first active layer is close to that of the second active layer, and the expansion degree is the same between the two active layers, thereby improving the stability of the electrode plate.

Optionally, the ternary material includes at least one of a 5-series monocrystalline ternary material, a 5-series polycrystalline ternary material, a 6-series monocrystalline ternary material, a 6-series polycrystalline ternary material, a 7-series monocrystalline ternary material, a 7-series polycrystalline ternary material, an 8-series monocrystalline ternary material, an 8-series polycrystalline ternary material, a 9-series monocrystalline ternary material, a 9-series polycrystalline ternary material, or a cobalt-free ternary material.

The ternary material is not particularly limited herein, and may be at least one of a 5-series monocrystalline ternary material, a 5-series polycrystalline ternary material, a 6-series monocrystalline ternary material, a 6-series polycrystalline ternary material, a 7-series monocrystalline ternary material, a 7-series polycrystalline ternary material, an 8-series monocrystalline ternary material, an 8-series polycrystalline ternary material, a 9-series monocrystalline ternary material, a 9-series polycrystalline ternary material, or a cobalt-free ternary material.

Optionally, the first active layer includes a first active material, a conductive agent, and a binder; the first active material includes a lithium manganese iron phosphate material coated with a conductive coating material; a mass of the lithium manganese iron phosphate material coated with the conductive coating material is 94% to 97% of a total mass of the first active layer; and/or the second active layer includes a second active material, a conductive agent, and a binder; the second active material includes a ternary material; and a mass of the ternary material is 95% to 98% of a total mass of the second active layer.

The first active layer includes a first active material, a conductive agent, and a binder. The first active material includes a lithium manganese iron phosphate material coated with a conductive coating material. A mass of the lithium manganese iron phosphate material coated with the conductive coating material is 94% to 97% of a total mass of the first active layer. When the mass percent of the lithium manganese iron phosphate material coated with the conductive coating material falls within this range (for example, 94%, 95%, 96%, 97%, or a value falling within a range formed by any two thereof), the active material of excellent performance can be prepared. In the active layer, the mass percent of the binder may be 1.8%, 2%, 2.5%, 3%, or the like, and the mass percent of the conductive agent may be 1.8%, 2%, 2.5%, or the like.

The second active layer includes a second active material, a conductive agent, and a binder. The second active material includes a ternary material. A mass of the ternary material is 95% to 98% of a total mass of the second active layer. When the mass percent of the ternary material falls within this range (for example, 95%, 96%, 97%, 98%, or a value falling within a range formed by any two thereof), the active material of excellent performance can be prepared. In the active layer, the mass percent of the binder may be 1.5%, 2%, 2.5%, or the like, and the mass percent of the conductive agent may be 1.8%, 2%, 2.5%, or the like.

This application further provides a method for preparing a composite electrode, including the following steps: applying a first active material layer slurry and a second active material layer slurry onto a current collector, and performing drying and then cold-pressing to obtain a composite electrode.

In the above step, the first active material layer slurry and the second active material layer slurry form a first active layer and a second active layer, respectively; the first active layer is disposed on the current collector; the second active layer is disposed on one side, oriented away from the current collector, of the first active layer; the first active layer includes a lithium manganese iron phosphate material; at least a part of a surface of the lithium manganese iron phosphate material is coated with a conductive coating material; and a mass of the conductive coating material is 1.0% to 10.0% of a mass of the lithium manganese iron phosphate material.

The first active material layer slurry and the second active material layer slurry are applied onto the current collector to form a multi-layer composite structure. After the composite structure is dried and then cold-pressed, a composite electrode is obtained. In addition, the first active material layer slurry and the second active material layer slurry form a first active layer and a second active layer, respectively. The first active layer is disposed on the current collector. The second active layer is disposed on one side, oriented away from the current collector, of the first active layer. The first active layer includes a lithium manganese iron phosphate material. At least a part of a surface of the lithium manganese iron phosphate material is coated with a conductive coating material. With the designed composite electrode, the composite electrode includes a plurality of active layers. At least a part of the surface of the lithium manganese iron phosphate material is coated with a conductive coating material. The conductive coating material improves the conductivity of the lithium manganese iron phosphate material. The active layer containing the lithium manganese iron phosphate material is disposed in the inner layer, and the remaining active layer is disposed in the outer layer. In this way, the active layer containing the lithium manganese iron phosphate material is prevented from being directly exposed outside in a large area, thereby alleviating the problem that the lithium manganese iron phosphate material coated with the conductive coating material catalyzes decomposition of the electrolyte solution at a high potential under a high-conductivity condition.

Optionally, the step of "applying a first active material layer slurry and a second active material layer slurry onto a current collector, and performing drying and then cold-pressing to obtain a composite electrode" includes the following steps: applying the first active material layer slurry onto the current collector, performing drying, and then applying the second active material layer slurry onto the first active material layer, and performing drying and then cold-pressing to obtain a composite electrode.

The composite electrode is prepared by the following method: preparing a current collector, applying a first active material layer slurry onto the current collector, drying the first active material layer slurry by using a drying mechanism so that the first active material layer slurry becomes a first active layer, applying a second active material layer slurry onto the first active layer, drying the second active material layer slurry so that the current collector is coated with two active layers; cold-pressing the electrode plate by using a cold-pressing mechanism, and then cold-pressing the current collector to compact the active layers on the current collector to obtain a composite electrode of a specified thickness.

Optionally, the step of "applying a first active material layer slurry and a second active material layer slurry onto a current collector, and performing drying and then cold-pressing to obtain a composite electrode" includes the following steps: applying the first active material layer slurry and the second active material layer slurry onto the current collector simultaneously, performing drying for the two slurries simultaneously, and, after completion of drying, performing cold-pressing to obtain a composite electrode.

By applying the first active material layer slurry and the second active material layer slurry onto the current collector simultaneously, this application can improve the coating efficiency, reduce the energy consumed by the drying, and simplify the two drying steps into one drying step. In addition, the coating process prevents an interface from being formed between the two layers. The two active layers fuse well with each other to form a more stable structure.

Optionally, the process of applying a first active material layer slurry and a second active material layer slurry onto a current collector includes the following steps: applying a primer onto the current collector first, and then applying the first active material layer slurry and the second active material layer slurry onto the primer.

In this step, a high-viscosity coating layer is applied onto the current collector first, and then the first active material layer slurry and the second active material layer slurry are applied, thereby increasing the bonding force between the active material and the substrate.

Optionally, in the step of performing cold-pressing to obtain a composite electrode after completion of drying, a drying temperature is 90 °C to 120 °C, a cold-pressing pressure is 20 tons to 40 tons, and a cold-pressing temperature is 15 °C to 35 °C.

In order to effectively remove the solvent in the slurry, the drying temperature is 90 °C to 120 °C, for example, 90 °C, 100 °C, 110 °C, or 120 °C. In order to compact the active layers to an appropriate density, the cold-pressing pressure is 20 tons to 40 tons, for example, 20 tons, 25 tons, 30 tons, 35 tons, 40 tons, or a value falling within a range formed by any two thereof. In addition, the cold-pressing performed at normal temperature simplifies the operation.

This application further provides a battery, including a negative electrode plate, a positive electrode plate, a separator, and an electrolyte solution. The positive electrode plate is the composite electrode.

By virtue of high stability, a high energy density, cost-effectiveness, and other advantages of the composite electrode, the battery cell prepared from the composite electrode is superior, and the battery prepared from the composite electrode is more cost-effective.

This application further provides an electrical device. The electrical device includes the battery.

The electrical device employs the above cost-effective battery to improve the performance of the electrical device and increase the use value of the electrical device.

The composite electrode of this application includes a current collector, a first active layer, and a second active layer. The first active layer is disposed on the current collector, and the second active layer is disposed on one side, oriented away from the current collector, of the first active layer. The first active layer includes a lithium manganese iron phosphate material. At least a part of the surface of the lithium manganese iron phosphate material is coated with a conductive coating material. The conductivity of the lithium manganese iron phosphate material is improved by the conductive coating material applied onto at least a part of the surface of the lithium manganese iron phosphate material. In addition, the second active layer disposed on one side, oriented away from the current collector, of the first active layer, reduces the risk of direct contact between the electrolyte solution and the lithium manganese iron phosphate material coated with the conductive coating material in the first active layer, reduces the risk of catalytic decomposition of the electrolyte solution at a high potential, alleviates the problem of gas production reactions and battery cell swelling, alleviates capacity fading, and improves the stability while improving the conductivity of the composite electrode. A larger amount of the conductive coating material applied leads to higher conductivity, and in turn, higher C-rate performance of the battery. However, if the content of the conductive coating material is further increased, the actual content of the active material is reduced, and the energy density of the electrode is impaired. Therefore, the mass of the conductive coating material is set to be 1.0% to 10.0%, for example, 1.0%, 2.0%, 3.0%, 4.0%, 5.0%, 6.0%, 7.0%, 8.0%, 9.0%, 10.0%, or a value falling within a range formed by any two thereof, of the mass of the lithium manganese iron phosphate material. In addition, the second active layer covers the lithium manganese iron phosphate material layer, thereby directly blocking the conductive coating material on at least a part of the surface of the lithium manganese iron phosphate material, alleviating the problem that the conductive coating material catalyzes the decomposition of the electrolyte solution at a high potential. In this case, the dosage of the conductive coating material may be increased to improve the conductivity of the lithium manganese iron phosphate material layer.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person of ordinary skill in the art may derive other drawings from the illustrated structure without making any creative effort.
FIG. 1 is a schematic flowchart of a method for preparing a composite electrode according to an embodiment of this application;
FIG. 2 is a schematic flowchart of a method for preparing a composite electrode according to another embodiment of this application;
FIG. 3 is a schematic flowchart of a method for preparing a composite electrode according to still another embodiment of this application;
FIG. 4 is a schematic flowchart of a method for preparing a composite electrode according to yet another embodiment of this application;
FIG. 5 is a schematic structural diagram of a first active layer and a second active layer of a composite electrode according to this application;
FIG. 6 is a schematic structural diagram of a composite electrode according to an embodiment of this application;
FIG. 7 is a schematic structural diagram of a composite electrode according to another embodiment of this application;
FIG. 8 is a schematic structural diagram of a composite electrode according to still another embodiment of this application; and
FIG. 9 is a schematic structural diagram of a composite electrode according to yet another embodiment of this application.

List of reference numerals:

| Reference numeral | Name | Reference numeral | Name |
|---|---|---|---|
| 100 | composite electrode | 3 | second active layer |
| 1 | current collector | 4 | third active layer |
| 2 | first active layer | 5 | fourth active layer |

The objective fulfillment, functional characteristics, and advantages of this application are described below in more detail with reference to the drawings.

### DETAILED DESCRIPTION OF EMBODIMENTS

The following clearly and thoroughly describes the technical solutions in some embodiments of this application with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that all directional indicators (for example, up, down, left, right, front, back, and so on) in the embodiments of this application are merely used to explain a relative position relationship, movement state and the like between components in a specific posture (as shown in the drawings). When the specific posture changes, the directional indicators change accordingly.

In this application, unless otherwise expressly specified and qualified, the terms such as "connection" and "fixing" need to be understood in a broad sense, for example, understood as a fixed connection or a detachable connection or understood as being integrated into a whole; or understood as a mechanical connection or an electrical connection, a direct connection or an indirect connection implemented through an intermediary; or understood as interior communication between two components or interaction between two components. A person of ordinary skill in the art is able to understand the specific meanings of the terms in this application according to specific situations.

In addition, the terms such as "first" and "second" used herein are merely intended for ease of description, but not understood as indicating or implying priority or implicitly specifying the number of technical features mentioned. Therefore, the features preceded by "first" or "second" may explicitly or implicitly include at least one of such features. In addition, the term "and/or" used herein means three parallel solutions. For example, "A and/or B" means A, or B, or both A and B. In addition, the technical solutions of different embodiments may be combined with each other to the extent practicable by a person of ordinary skilled in the art. When a combination of technical solutions is contradictory or impracticable, the combination of technical solutions is considered to be nonexistent and fall outside the protection scope claimed by this application.

Batteries mentioned in this field may be classed into a primary battery and a rechargeable battery depending on rechargeability. Currently, common types of rechargeable batteries include: lead-acid battery, nickel-metal hydride battery, and lithium-ion battery. The lithium-ion battery is widely applied to battery electric vehicles and hybrid vehicles currently. The lithium-ion battery for use in such vehicles possesses a relatively low capacity, but a relatively high output current, a relatively high charge current, and a long lifespan in spite of a relatively high cost.

The battery described in the embodiments of this application means a rechargeable battery. The following describes some embodiments of this application by primarily using a lithium-ion battery as an example. Understandably, the disclosed embodiments of this application are applicable to any other suitable types of rechargeable batteries. A battery mentioned in an embodiment disclosed herein is directly or indirectly applicable to an appropriate device to power the device.

The battery mentioned in an embodiment disclosed herein means a single physical module that includes one or more battery cells to provide a preset voltage and a preset capacity. A battery cell is an elementary unit of the battery. Depending on the form of packaging, battery cells are generally classed into three types: cylindrical cell, prismatic cell, and pouch cell. The following description mainly focuses on a prismatic cell. Understandably, the embodiments described below are applicable to cylindrical cells or pouch cells in some aspects.

A battery cell includes a positive electrode plate, a negative electrode plate, an electrolyte solution, and a separator. A lithium-ion battery cell works primarily by movement of lithium ions between the positive electrode plate and the negative electrode plate. A thin film structure compounded of three layers of materials in a cylindrical cell is wound into a cylinder-shaped electrode assembly. The thin film structure in a prismatic cell is wound or stacked to form an electrode assembly in the approximate shape of a cuboid.

In a typical battery cell structure, a battery cell includes a shell, an electrode assembly, and an electrolyte solution. The electrode assembly is accommodated in the shell of the battery cell. The electrode assembly includes a positive electrode plate, a negative electrode plate, and a separator. The shell includes a housing and an end cap. The shell includes an accommodation cavity formed by a plurality of walls and includes an opening. The end cap is disposed at the opening to close the accommodation cavity. The accommodation cavity further accommodates an electrolyte solution in addition to the electrode assembly. The positive electrode plate and the negative electrode plate in the electrode assembly each include a tab. To prevent a large electrical current from tripping the circuit, a plurality of positive tabs are stacked together, and a plurality of negative tabs are stacked together. Through a connecting component, the tabs are electrically connected to electrode terminals located outside the battery cell. The electrode terminals generally include a positive electrode terminal and a negative electrode terminal. For a prismatic cell, the electrode terminals are generally disposed at the end cap part. A plurality of battery cells are connected together in series and/or in parallel through electrode terminals, so as to be applied in various scenarios.

In high-power application scenarios such as electric vehicles, a battery is applied in different hierarchical forms such as a battery cell, a battery module, and a battery. The battery module is formed by electrically connecting a specific quantity of battery cells together and putting the battery cells into a frame, so as to protect the battery cells from external impact, heat, vibration, and the like. The battery is a final state of a battery system mounted in an electric vehicle. A battery typically includes a box configured to package one or more battery cells. The box generally includes a cover and a box shell.

A plurality of mounting points for connecting to the vehicle body are disposed on the rim of the box or in the middle of the box shell. In order to improve the stability of the connection between the vehicle body and the battery, a mounting portion is usually disposed at the mounting points.

In some battery production and processing technologies, a plurality of battery cells are integrated to form a battery module first, and then the battery module is packaged in the battery box to form a battery pack or battery box.

A typical battery module generally includes two end plates. A plurality of battery cells are arranged between the two end plates. An end plate equipped with an output electrode of the battery module is also referred to as an output electrode end plate. An end plate without the output electrode of the battery module is also referred to as a non-output electrode end plate.

A plurality of battery modules in one row may be packaged in the battery pack, or a plurality of battery modules in a plurality of rows may be packaged in the battery pack. The plurality of battery modules in a plurality of rows may be arranged in double rows and multiple columns, multiple rows and double columns, multiple rows and multiple columns, or the like. Taking a battery pack containing double rows and multiple columns of battery modules as an example, the first end plate of each column is generally a head output electrode plate. The two adjacent end plates between two rows of battery modules are middle non-output electrode end plates. The last end plate of each column is a tail non-output electrode end plate. The head output electrode end plate and one of the middle non-output electrode end plates belong to the first row of battery modules. One of the middle non-output electrode end plates and the tail output electrode end plate belong to the second row of battery modules.

The battery module is packaged into the battery box by means of tooling. A clamping mechanism for clamping the battery module, such as a claw or a suction cup, is usually disposed on the tooling. When a battery module is packaged by using tooling that includes a claw, a claw groove that matches the claw is generally disposed on one side, oriented away from the battery cell, of the end plate, so that the claw can be inserted into the claw groove to clamp and transport the battery module.

The development of the battery technology needs to consider a variety of design factors, including performance parameters such as energy density, cycle life, discharge capacity, charge rate, and discharge rate, and also needs to consider the production cost and processing process of the batteries, so as to improve the quality and production efficiency of the batteries.

In contrast to lithium iron phosphate, the energy density of the lithium manganese iron phosphate material is increased significantly, but with safety unimpaired and almost equivalent to the safety of lithium iron phosphate. The lithium manganese iron phosphate material is much superior to the ternary material. Despite many advantages, the lithium manganese iron phosphate material has not been put in massive commercial use due to the following main technical problems: the lithium manganese iron phosphate material is of low conductivity, and is doped with just a small amount of conductive carbon based on the conventional formula, thereby being hardly able to meet the requirement. Each particle needs to be coated with a layer of dense porous carbon to enhance the electronic conduction between particles. Understandably, a higher content of carbon leads to a higher conductivity and higher C-rate performance of the battery. However, when the battery is fully charged, the overly high content of carbon results in catalytic decomposition of the electrolyte solution at a high potential, intensifies gas production, and causes the battery cell to swell, thereby not only leading to capacity fading but also intensifying gas production and battery cell swelling. For example, understandably, the porous carbon used as a conductive coating material contains defects and an oxygen-containing functional group. The defects and the oxygen-containing functional group can catalyze the decomposition of the electrolyte solution. In addition, in another possible scenario, other types of conductive coating materials may also contain impurities that catalyze the decomposition of the electrolyte solution. For example, active constituent impurities in a metal oxide also catalyzes the decomposition of the electrolyte solution.

To solve the above problem, according to one aspect of this application, in order to improve the conductivity of the lithium manganese iron phosphate material and reduce the risk that the lithium manganese iron phosphate material coated with a conductive material catalyzes the decomposition of the electrolyte solution at a high potential under a high-conductivity condition, this application designs a composite electrode. The composite electrode includes a plurality of active layers. At least a part of the surface of the lithium manganese iron phosphate material is coated with a conductive coating material. The conductive coating material improves the conductivity of the lithium manganese iron phosphate material. The active layer containing the lithium manganese iron phosphate material is disposed in the inner layer, and the remaining active layer is disposed in the outer layer. In this way, the active layer containing the lithium manganese iron phosphate material is prevented from being directly exposed outside in a large area, thereby alleviating the problem that the lithium manganese iron phosphate material coated with the conductive coating material catalyzes decomposition of the electrolyte solution at a high potential under a high-conductivity condition.

The composite electrode of this application includes a current collector, a first active layer, and a second active layer. The first active layer is disposed on the current collector. The second active layer is disposed on one side, oriented away from the current collector, of the first active layer. The first active layer includes a lithium manganese iron phosphate material. At least a part of a surface of the lithium manganese iron phosphate material is coated with a conductive coating material. A mass of the conductive coating material is 1.0% to 10.0% of a mass of the lithium manganese iron phosphate material.

The current collector, as the name implies, means a structure or component that collects current. In a lithium-ion battery, the current collector mainly means a metal foil such as a copper foil and an aluminum foil. In a broad sense, the current collector may include a tab. The function of the current collector is to collect the current generated by the active material of the battery, so as to form a larger current for being output to the outside.

The active layer means a layered structure with an active material. The active material means a positive active material on a positive electrode. The positive active material may be a compound that enables reversible intercalation and deintercalation of L⁺ ions.

Coating means coating the surface of a material with a conductive material to improve conductivity.

The conductive coating material means a conductive material that coats the surface of lithium manganese iron phosphate, for example, a coating carbon material, a conductive polymer, or the like that coats the surface of lithium manganese iron phosphate particles.

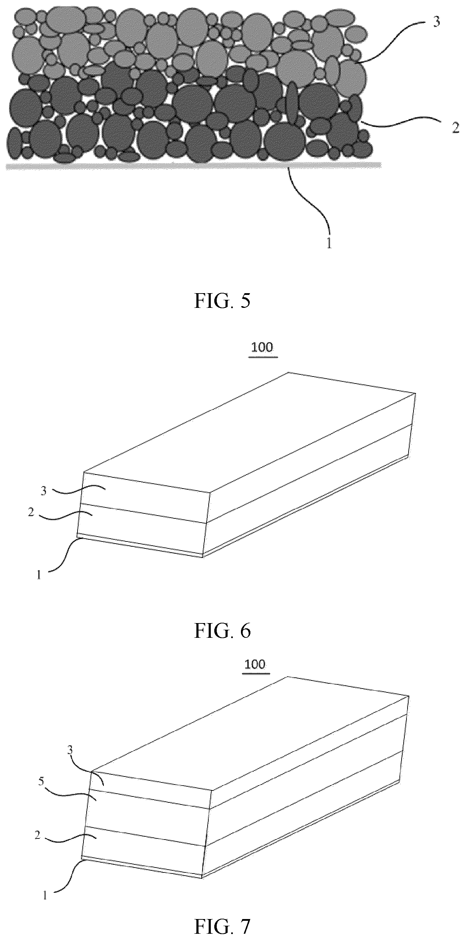

As shown in FIG. 5 to FIG. 9, in the composite electrode of this application, the conductivity of the lithium manganese iron phosphate material is improved by the conductive coating material that coats at least a part of the surface of the lithium manganese iron phosphate material. In addition, the second active layer 3 disposed on one side, oriented away from the current collector 1, of the first active layer 2, reduces the risk of direct contact between an electrolyte solution and the lithium manganese iron phosphate material coated with the conductive coating material in the first active layer, reduces a risk of catalytic decomposition of the electrolyte solution at a high potential, alleviates the problems of gas production reactions and battery cell swelling, alleviates capacity fading, and improves the stability while improving the conductivity of the composite electrode. A larger amount of the conductive coating material applied leads to higher conductivity, and in turn, higher C-rate performance of the battery. However, if the content of the conductive coating material is further increased, the actual content of the active material is reduced, and the energy density of the electrode is impaired. Therefore, the mass of the conductive coating material is set to be 1.0% to 10.0%, for example, 1.0%, 2.0%, 3.0%, 4.0%, 5.0%, 6.0%, 7.0%, 8.0%, 9.0%, 10.0%, or a value falling within a range formed by any two thereof, of the mass of the lithium manganese iron phosphate material. In addition, the second active layer covers the lithium manganese iron phosphate material layer, thereby directly blocking the conductive coating material on at least a part of the surface of the lithium manganese iron phosphate material from contacting the electrolyte solution, alleviating the risk that the conductive coating material catalyzes the decomposition of the electrolyte solution at a high potential. In this case, the dosage of the conductive coating material may be increased to improve the conductivity of the lithium manganese iron phosphate material layer.

Understandably, one of the main functions of the second active layer is to cover the lithium manganese iron phosphate material layer. The constituents of the second active layer are not particularly limited herein.

Further, the mass of the conductive coating material on at least a part of the surface of the lithium manganese iron phosphate material is 1% to 5% of the mass of the lithium manganese iron phosphate material.

A larger amount of the conductive coating material applied leads to higher conductivity, and in turn, higher C-rate performance of the battery. However, if the content of the conductive coating material is further increased, the actual content of the active material is reduced, and the energy density of the electrode is impaired. Therefore, the mass of the conductive coating material is set to be 1.0% to 5%, for example, 1.0%, 2.0%, 3.0%, 4.0%, 5.0%, or a value falling within a range formed by any two thereof, of the mass of the lithium manganese iron phosphate material.

Further, the mass of the conductive coating material on at least a part of the surface of the lithium manganese iron phosphate material is 1.3% to 2.5% of the mass of the lithium manganese iron phosphate material.

When the mass of the conductive coating material on at least a part of the surface of the lithium manganese iron phosphate is 1.3% to 2.5% of the mass of the lithium manganese iron phosphate material, the performance of the battery is relatively high. Therefore, the mass of the conductive coating material is 1.3% to 2.5% of the mass of the lithium manganese iron phosphate material, for example, may be 1.3%, 1.5%, 1.8%, 2.0%, 2.3%, 2.5%, or a value falling within a range formed by any two thereof, of the mass of the lithium manganese iron phosphate material.

Further, the conductive coating material is a carbon material.

With the carbon material being used as the conductive coating material, the porous carbon used as the coating material contains defects and an oxygen-containing functional group. The defects and the oxygen-containing functional group can catalyze the decomposition of the electrolyte solution. At least a part of the surface of the lithium manganese iron phosphate material is coated with a carbon material. The carbon material improves the conductivity of the lithium manganese iron phosphate material. The active layer containing the lithium manganese iron phosphate material is disposed in the inner layer, and the remaining active layer is disposed in the outer layer. In this way, the active layer containing the lithium manganese iron phosphate material is prevented from being directly exposed outside in a large area, thereby alleviating the problem that the lithium manganese iron phosphate material coated with the carbon material catalyzes decomposition of the electrolyte solution at a high potential under a high-conductivity condition. The disposed laminar active layer can increase the coating weight of the carbon material on at least a part of the surface of the lithium manganese iron phosphate material, and improve the conductivity of the lithium manganese iron phosphate material, thereby solving the problem of deficient conductivity caused by the small amount of conductive carbon added according to a conventional formula.

Further, the composite electrode further includes a third active layer, and the third active layer is disposed between the current collector and the first active layer; and/or the composite electrode further includes a fourth active layer, and the fourth active layer is disposed between the first active layer and the second active layer.

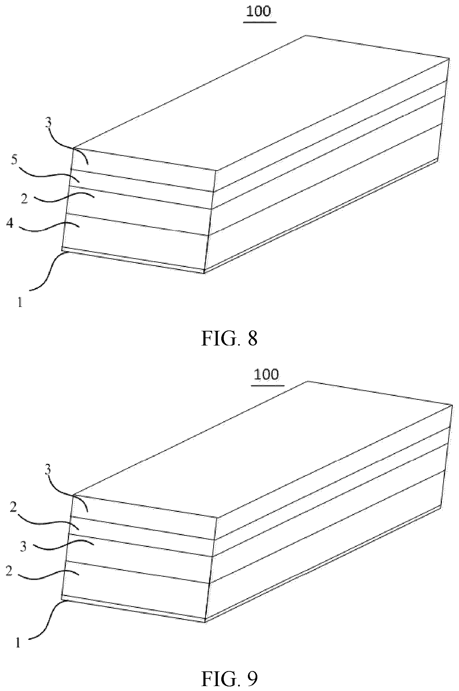

As shown in FIG. 8 and FIG. 9, in this application, on the basis of satisfying that the second active layer covers the first active layer, the composite electrode further includes a third active layer 4. The third active layer is disposed between the current collector 1 and the first active layer 2, thereby also achieving the above effect, where the material of the third active layer is not limited.

It is also understandable that the composite electrode further includes a fourth active layer 5. The fourth active layer is disposed between the first active layer 2 and the second active layer 3, thereby also achieving the above effect, where the material of the fourth active layer 5 is not limited. For example, the first active layer is a lithium manganese iron phosphate layer containing a conductive coating material, the second active layer is a high-nickel ternary material layer, and the fourth active layer is a medium-nickel ternary material layer; or, the first active layer is a high-manganese lithium manganese iron phosphate layer coated with a conductive coating material, the second active layer is a ternary material layer, and the fourth active layer is a low-manganese lithium manganese iron phosphate layer coated with a conductive coating material.

Further, understandably, as shown in FIG. 9, the first active layer 2 and the second active layer 3 are used as a repeating unit. A plurality of repeating units are disposed on the current collector 1, thereby also achieving the above effect. In other words, the arrangement is not limited as long as the first active layer 2 is disposed in the inner layer of the multilayer structure of the composite electrode to reduce the direct contact between the lithium manganese iron phosphate material in the first active layer and the electrolyte solution.

Further, understandably, the second active layer may fully cover the first active layer 2, or partially cover the first active layer 2, without being particularly limited herein.

Further, the second active layer is disposed on a lateral peripheral surface of the first active layer.

Understandably, the more the area of the first active layer 2 is covered, the smaller the direct contact area between the lithium manganese iron phosphate material in the first active layer and the electrolyte solution will be. In order to further reduce the direct contact between the lithium manganese iron phosphate material in the first active layer and the electrolyte solution, the second active layer is made to cover the first active layer. In other words, the second active layer covers all the exposed structure of the first active layer. For example, the second active layer not only covers the surface of the first active layer, but also covers the lateral peripheral surface of the first active layer.

Further, the first active layer further includes a ternary material. The mass of the lithium manganese iron phosphate material is 20% to 80% of a total mass of the first active layer.

The ternary material such as a ternary positive electrode material is a layered lithium nickel-cobalt-manganese (aluminum) oxide composite material. Nickel, cobalt, and manganese are transition metal elements. The resulting solid solution may be mixed at any ratio. An increased mass percent of nickel can improve the specific energy of the battery. An increased mass percent of manganese can ensure structural stability. An increased mass percent of cobalt can stabilize the layered structure of the material. The ternary material is conducive to the cycle performance and C-rate performance of the battery. It is further understandable that the ternary material may include a cobalt-free material. For example, the ternary material may contain another metal element Mo, Nb, or the like in place of cobalt.

The current compaction density of lithium manganese iron phosphate is lower than that of lithium iron phosphate LFP. From perspective of the material, the material can increase the energy density. However, from perspective of the electrode plate, due to the low compaction density of lithium manganese iron phosphate, the amount of active material applied onto the substrate per unit area is even smaller, thereby ultimately making the overall energy density not significantly superior to that in the LFP system.

To solve the above problem and increase the energy density of the composite electrode, the first active layer further includes a ternary material. In addition, the mass of the lithium manganese iron phosphate material is 20% to 80% of the total mass of the first active layer. For example, the mass of the lithium manganese iron phosphate material may be 20%, 30%, 40%, 50%, 60%, 70%, 80%, or a value falling within a range formed by any two thereof, of the total mass of the first active layer. The mass of the lithium manganese iron phosphate material needs to avoid being overly low or overly high. An overly low mass of the lithium manganese iron phosphate material leads to an overly high mass of the ternary material, and reduces the stability of the battery. An overly high mass of the lithium manganese iron phosphate material leads to an overly low mass of the ternary material, and results in a deficient energy density.

In other words, because the compaction density of lithium manganese iron phosphate is relatively low while the gravimetric capacity and compaction density of the ternary material are generally high, by adjusting the mass percentages of the lithium manganese iron phosphate and the ternary material in the first active layer, this application can adjust and control the energy density of the composite electrode to achieve a battery cell characterized by high stability, high energy density, and cost-effectiveness.

Further, an average particle diameter Dᵥ₅₀ of the lithium manganese iron phosphate material is 0.2 µm to 1 µm.

The ion conductivity of the lithium manganese iron phosphate material is very low. Oversized particles lead to a long transmission path of lithium ions and low kinetic performance. Undersized particles achieve high kinetic performance but lead to low processability and make it difficult to apply the material onto the current collector. Therefore, the average particle diameter Dᵥ₅₀ of the lithium manganese iron phosphate material may be 0.2 µm, 0.3 µm, 0.4 µm, 0.5 µm, 0.6 µm, 0.7 µm, 0.8 µm, 0.9 µm, 1 µm, or a value falling within a range formed by any two thereof.

Further, a general structural formula of the lithium manganese iron phosphate material is LiMnₓFe_{y}M_{1-x-y}PO₄, where 0.2 ≤ x ≤ 0.8; 0.1 ≤ y ≤ 0.5; 0 ≤1 - x - y <_ 0.2; and M represents a doping element, and optionally includes at least one of Al, Cu, Mg, Zn, Ni, Ti, V, Zr, Co, Ga, Sn, Sb, Nb, or Ge.

A general structural formula of the lithium manganese iron phosphate material is LiMnₓFe_{y}M_{1-x-y}PO₄, where 0.2 ≤ x ≤ 0.8; 0.1 ≤ y ≤ 0.5; 0 ≤1 - x - y ≤ 0.2; and M represents a doping element, and optionally includes at least one of Al, Cu, Mg, Zn, Ni, Ti, V, Zr, Co, Ga, Sn, Sb, Nb, or Ge. When the molar percent of manganese in the lithium manganese iron phosphate material is 20% to 80%, the performance is relatively high. For example, the molar percent of manganese in the lithium manganese iron phosphate material may be 20%, 30%, 40%, 50%, 60%, 70%, 80%, or a value falling within a range formed by any two thereof.

Further, a thickness of the first active layer is 20% to 80% of a total thickness of the active layers.

The first active layer includes a lithium manganese iron phosphate material, and the thickness of the first active layer is 20% to 80%, for example, 20%, 30%, 40%, 50%, 60%, 70%, 80%, or a value falling within a range formed by any two thereof, of the total thickness of the active layers. The thickness of the lithium manganese iron phosphate material needs to avoid being overly low or overly high. For example, when other active layers include a ternary material, an overly low thickness of the lithium manganese iron phosphate material leads to an overly high thickness of the ternary material, and reduces the stability of the battery. An overly high thickness of the lithium manganese iron phosphate material leads to an overly low thickness of the ternary material, and results in a deficient energy density.

Further, the compaction density of the second active layer is greater than the compaction density of the first active layer.

The compaction density of the active layer is calculated as: compaction density = areal density/(thickness of the rolled electrode plate - thickness of the current collector), in units of g/cm³.

The calculation of the compaction density of the active layer is based on the mass of all materials in the rolled electrode plate. The active layer includes conductive carbon and a binder in addition to the active material.

With the increase of the compaction density, the volume density of the active layer increases, the porosity decreases, the specific surface area increases, the contact resistance decreases, a solid electrolyte interface (SEI) film resistance of the electrode decreases, and the charge transfer resistance decreases. A relatively low compaction density causes the problem of a low specific discharge capacity instead. A main reason is that the relatively high porosity causes some particles to be in an insulated state and unable to participate in charging and discharging. In contrast, the electrode of a high compaction density possesses a higher break strength, thereby reducing the risk that the electrode particles fall off and become insulated particles during cycling. A high compaction density can significantly make the distribution of the pore size and pores of the electrode more uniform, make the distribution of the conductive agent and the binder more uniform, reduce the contact resistance and charge transfer resistance of the electrode, and increase the active area that can participate in reactions, thereby significantly improving the electrochemical performance of the material. Therefore, the compaction density of the active layer needs to be appropriate so as to improve the performance of the active layer. Considering that the first active layer includes the lithium manganese iron phosphate material and the second active layer includes a ternary material, based on the inherent structural characteristics of the lithium manganese iron phosphate material and the ternary material, the compaction density of the second active layer is greater than the compaction density of the first active layer.

Further, the compaction density of the second active layer is 3.0 g/cm³ to 4.5 g/cm³, and the compaction density of the first active layer is 2.2 g/cm³ to 3.0 g/cm³.

The first active layer includes the lithium manganese iron phosphate material. Based on the inherent structural characteristics of the lithium manganese iron phosphate material, the compaction density of the first active layer is 2.2 g/cm³ to 3.0 g/cm³. The resulting composite electrode is of desirable application value when the compaction density of the first active layer falls within such a range. The second active layer includes a ternary material. Based on the structural characteristics of the ternary material, the compaction density of the second active layer is 3.0 g/cm³ to 4.5 g/cm³. The resulting composite electrode is of desirable application value when the compaction density of the second active layer falls within such a range.

Further, the second active layer includes at least one of a ternary material or lithium cobalt oxide.

Lithium cobalt oxide is an inorganic compound represented by a chemical formula LiCoO₂, and is typically used as a positive electrode material of a lithium-ion battery.

Due to the low compaction density of lithium manganese iron phosphate, the amount of active material applied on the substrate per unit area is smaller, and ultimately, the overall energy density is not obviously superior to that of the LFP system. In contrast, the gravimetric capacity and compaction density of the ternary material are generally high. By adjusting the mass percentages of the materials in the first active layer and the second active layer, this application can adjust and control the energy density of the composite electrode to achieve a battery cell characterized by high stability, high energy density, and cost-effectiveness.

For this purpose, the second active layer includes at least one of a ternary material or lithium cobalt oxide. For example, the second active layer may include a ternary material or lithium cobalt oxide. Alternatively, the second active layer may further include a mixture of a ternary material and lithium cobalt oxide, without being particularly limited herein. Definitely, the second active layer may include other materials applicable to a positive electrode in addition to the ternary material and lithium cobalt oxide.

Compared with an electrode made of pure lithium manganese iron phosphate, this design can increase the energy density of the battery cell and makes the energy density customizable. In addition, compared with a pure ternary material, the increased content of lithium manganese iron phosphate can reduce the risk of the ternary material catching fire. In addition, due to the high cost of the ternary material, the composite electrode of this application can reduce cost and improve the cost-effectiveness.

It is difficult to delithiate the lithium manganese iron phosphate material in a high State-of-Charge (SOC). In other words, a battery cell made of this material is hardly rechargeable when the SOC approaches 100%. The polarization of the battery is drastic, and lithium ions can hardly be deintercalated from the positive electrode material and intercalated into the negative electrode, so that it takes a lot of time to charge the battery to a full capacity.

By applying a layer of ternary material onto the surface of the electrode layer made of lithium manganese iron phosphate. During the charging, the superficial ternary material is more delithiated than the underlaid lithium manganese iron phosphate, thereby alleviating the difficulty of delithiating the lithium manganese iron phosphate in a high SOC state and alleviating the polarization of the electrode.

Understandably, the current collector is coated with an active material layer made of lithium manganese iron phosphate coated with a conductive coating material first, and is then coated with a ternary material layer that is equivalent to a physical isolation layer, thereby reducing the probability of direct contact between the electrolyte solution and the conductive coating material, and reducing gas production. This structure can appropriately increase the content of the conductive coating material of the lithium manganese iron phosphate to achieve the comprehensive advantages of both high conductivity and stability.

Further, an average particle diameter Dᵥ₅₀ of the ternary material or the lithium cobalt oxide included in the second active layer is 0.5 µm to 20 µm.

Understandably, oversized particles lead to a long transmission path of lithium ions and low kinetic performance. Undersized particles achieve high kinetic performance but lead to low processability and make it difficult to apply the material onto the current collector. Therefore, the average particle diameter Dᵥ₅₀ of the ternary material or lithium cobalt oxide in the second active material may be 0.5 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or a value falling within a range formed by any two thereof.

Further, when the second active layer includes the ternary material, a general structural formula of the ternary material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 ≤1 - a- b ≤ 0.35.

A general structural formula of the ternary material is LiNiₐCo_{b}N_{(1-a-b)}O₂, where N optionally includes at least one of Mn, Zr, Al, B, Ta, Mo, W, Nb, Sb, or La, 0.35 ≤ a < 1.0, 0 ≤ b ≤ 0.35, and 0 < 1 - a - b ≤ 0.35. Depending on the nickel content, the ternary material is categorized into a low-nickel ternary material, a medium-nickel ternary material, and a high-nickel ternary material. Depending on whether the material contains cobalt, the ternary material may be categorized into a cobalt-containing ternary material and a cobalt-free ternary material, where the cobalt may be replaced by another metal element. The type of the ternary material is not particularly limited herein.

Further, when the first active layer includes the ternary material, the ternary material in the first active layer is identical to the ternary material in the second active layer.

Theoretically, the ternary material in the first active layer may be identical to or different from the ternary material in the second active layer, but preferably identical. When the ternary material is identical, the advantage is that the amount of intercalated lithium of the first active layer is close to that of the second active layer, and the expansion degree is the same between the two active layers, thereby improving the stability of the electrode plate.

Further, the ternary material includes at least one of a 5-series monocrystalline ternary material, a 5-series polycrystalline ternary material, a 6-series monocrystalline ternary material, a 6-series polycrystalline ternary material, a 7-series monocrystalline ternary material, a 7-series polycrystalline ternary material, an 8-series monocrystalline ternary material, an 8-series polycrystalline ternary material, a 9-series monocrystalline ternary material, a 9-series polycrystalline ternary material, or a cobalt-free ternary material.

The 5-series ternary material means a ternary material in which the molar percent of nickel is greater than or equal to 50% and less than 60%. The 6-series ternary material means a ternary material in which the molar percent of nickel is greater than or equal to 60% and less than 70%. The 7-series ternary material means a ternary material in which the molar percent of nickel is greater than or equal to 70% and less than 80%. The 8-series ternary material means a ternary material in which the molar percent of nickel is greater than or equal to 80% and less than 90%. The 9-series ternary material means a ternary material in which the molar percent of nickel is greater than or equal to 90%, such as Ni90, Ni92, and Ni95. With the gradual increase of the nickel content, the energy density of the battery increases. The higher the nickel content, the higher the energy density of the battery cell, but the lower the cobalt content. The reduced cobalt content increases the risk of thermal stability of the battery sharply. The medium-nickel ternary material contains nickel just lower than the nickel content in a high-nickel ternary material, and also contains a high content of cobalt to ensure sufficient stability. In addition, the monocrystalline material generates less heat and is more stable. The monocrystalline medium-nickel ternary material currently achieves a good balance in terms of cost-effectiveness, thermal stability, energy density, cycle life, and the like.

The cobalt-free ternary material means a ternary material that contains no cobalt, for example, a ternary material in which the cobalt is replaced by another element.

The monocrystalline ternary material and the polycrystalline ternary material are named depending on the morphology of the material. Morphologically, a monocrystalline material includes individual dispersed particles. Correspondingly, a polycrystalline ternary material includes secondary particles agglomerated from primary particles.

Compared with a polycrystalline material, a monocrystalline material is more suitable for high voltage. In addition, there are no grain boundaries inside the monocrystalline material, thereby improving the cycle stability of the ternary material and prolonging the cycle life of the battery. With the molar ratio between nickel, cobalt, and manganese, the gravimetric capacity of the monocrystalline ternary material is slightly lower than that of the polycrystalline ternary material. However, due to a higher voltage, the monocrystalline ternary material achieves an overall energy density that is almost equivalent to the energy density of a high-nickel ternary material currently available. The disadvantages of the monocrystalline ternary material lie in the low C-rate performance, complicated production process, and costly material.

In other words, the ternary material is not particularly limited herein, and may be at least one of a 5-series monocrystalline ternary material, a 5-series polycrystalline ternary material, a 6-series monocrystalline ternary material, a 6-series polycrystalline ternary material, a 7-series monocrystalline ternary material, a 7-series polycrystalline ternary material, an 8-series monocrystalline ternary material, an 8-series polycrystalline ternary material, a 9-series monocrystalline ternary material, a 9-series polycrystalline ternary material, or a cobalt-free ternary material.

Further, the first active layer includes a first active material, a conductive agent, and a binder; the first active material includes a lithium manganese iron phosphate material coated with a conductive coating material; the mass of the lithium manganese iron phosphate material coated with the conductive coating material is 94% to 97% of the total mass of the first active layer; and/or the second active layer includes a second active material, a conductive agent, and a binder; the second active material includes a ternary material; and the mass of the ternary material is 95% to 98% of the total mass of the second active layer.

The first active layer includes a first active material, a conductive agent, and a binder. The first active material includes a lithium manganese iron phosphate material coated with a conductive coating material. A mass of the lithium manganese iron phosphate material coated with the conductive coating material is 94% to 97% of a total mass of the first active layer. When the mass percent of the lithium manganese iron phosphate material coated with the conductive coating material falls within this range (for example, 94%, 95%, 96%, 97%, or a value falling within a range formed by any two thereof), the active material of excellent performance can be prepared. In the active layer, the mass percent of the binder may be 1.8%, 2%, 2.5%, 3%, or the like, and the mass percent of the conductive agent may be 1.8%, 2%, 2.5%, or the like.

The second active layer includes a second active material, a conductive agent, and a binder. The second active material includes a ternary material. A mass of the ternary material is 95% to 98% of a total mass of the second active layer. When the mass percent of the ternary material falls within this range (for example, 95%, 96%, 97%, 98%, or a value falling within a range formed by any two thereof), the active material of excellent performance can be prepared. In the active layer, the mass percent of the binder may be 1.5%, 2%, 2.5%, or the like, and the mass percent of the conductive agent may be 1.8%, 2%, 2.5%, or the like.

A deficient amount of conductive agent leads to a low conductivity, and an excessive amount of conductive agent leads to a low energy density. A moderate amount of binder prevents the coating layer from falling off and makes the coating layer well resistant to heat. A deficient amount of binder leads to insufficient adhesion, and an excessive amount of binder leads to an excessive slurry viscosity.

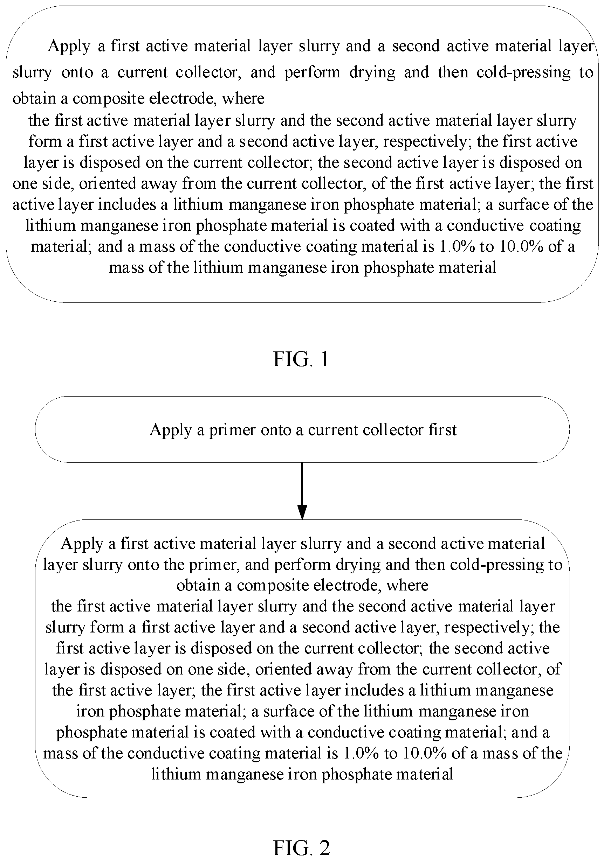

Further, as shown in FIG. 1, this application further provides a method for preparing a composite electrode. The method includes the following steps: applying a first active material layer slurry and a second active material layer slurry onto a current collector, and performing drying and then cold-pressing to obtain a composite electrode, where the first active material layer slurry and the second active material layer slurry form a first active layer and a second active layer, respectively. The first active layer is disposed on the current collector. The second active layer is disposed on one side, oriented away from the current collector, of the first active layer. The first active layer includes a lithium manganese iron phosphate material. At least a part of a surface of the lithium manganese iron phosphate material is coated with a conductive coating material. The mass of the conductive coating material is 1.0% to 10.0% of the mass of the lithium manganese iron phosphate material.

The first active material layer slurry means a material from which a first active layer is prepared. The second active material layer slurry means a material from which a second active layer is prepared.

Drying means a process of evaporating the solvent in the slurry to remove the solvent. The drying process leads to a low content of solvent in the electrode plate. If the solvent content is overly high, the lithium battery will consume excessive lithium during chemical formation and cause irreversible loss of lithium, thereby resulting in problems such as a reduced capacity and battery swelling, and impairing the battery performance.

Cold-pressing is a process of compressing the electrode plate. After being coated and dried, the positive electrode needs to be rolled within the process time limit. Rolling is a process of compacting the electrode plate, and is currently categorized into hot pressing and cold pressing. Hot pressing produces a higher compaction density than cold pressing, and induces a relatively low rebound rate, and can reduce the rolling force. However, the cold-pressing process is relatively simple and easy to operate and control. The rolling process primarily involves the following process values: compaction density, rebound rate, and elongation rate. The rolling process needs to avoid brittle sheets, hard lumps, detached active materials, wavy edges, and other phenomena on the surface of the electrode plate, and avoid fractures at a gap. The electrode plate rolling process can reduce the elongation rate and the width expansion rate of the electrode plate during rolling, and reduce the disruption rate of a pore structure of the electrode plate coating material; improve the thickness consistency of the electrode plate coating to improve the cross-sectional shape of the electrode plate; improve the compaction density consistency of the electrode material after the electrode plate is rolled; and reduce the rebound rate of the electrode material on the surface after the electrode plate is rolled. The electrode plate rolling process can also ensure smoothness and flatness of the electrode plate surface, prevent burrs on the coating surface from piercing the separator and causing a short circuit; compact the electrode plate coating material to reduce the volume of the electrode plate and increase the energy density of the battery; lead to closer contact between the active material and the conductive agent particles to improve electronic conductivity; increase the bonding strength between the coating material and the current collector, reduce the probability of active material powder shedding from the electrode plate during cycling, and increase the cycle life and stability of the battery.

For example, the electrode plate may be compressed by use of two roller shafts to generate friction between the roller and the battery electrode plate, so as to pull the battery electrode plate into the rotating rollers and deform the battery electrode plate compressively. The rolling of the battery electrode plate is a process of compacting the battery material on a positive or negative electrode plate, and can increase the compaction density of the positive or negative electrode material. An appropriate compaction density can increase the discharge capacity of the battery, reduce the internal resistance, reduce the polarization loss, prolong the cycle life of the battery, and improve the utilization rate of the lithium-ion battery.

The first active material layer slurry and the second active material layer slurry are applied onto the current collector to form a multi-layer composite structure. After the composite structure is dried and then cold-pressed, a composite electrode is obtained. In addition, the first active material layer slurry and the second active material layer slurry form a first active layer and a second active layer, respectively. The first active layer is disposed on the current collector. The second active layer is disposed on one side, oriented away from the current collector, of the first active layer. The first active layer includes a lithium manganese iron phosphate material. At least a part of a surface of the lithium manganese iron phosphate material is coated with a conductive coating material. With the designed composite electrode, the composite electrode includes a plurality of active layers. At least a part of the surface of the lithium manganese iron phosphate material is coated with a conductive coating material. The conductive coating material improves the conductivity of the lithium manganese iron phosphate material. The active layer containing the lithium manganese iron phosphate material is disposed in the inner layer, and the remaining active layer is disposed in the outer layer. In this way, the active layer containing the lithium manganese iron phosphate material is prevented from being directly exposed outside in a large area, thereby alleviating the problem that the lithium manganese iron phosphate material coated with the conductive coating material catalyzes decomposition of the electrolyte solution at a high potential under a high-conductivity condition.

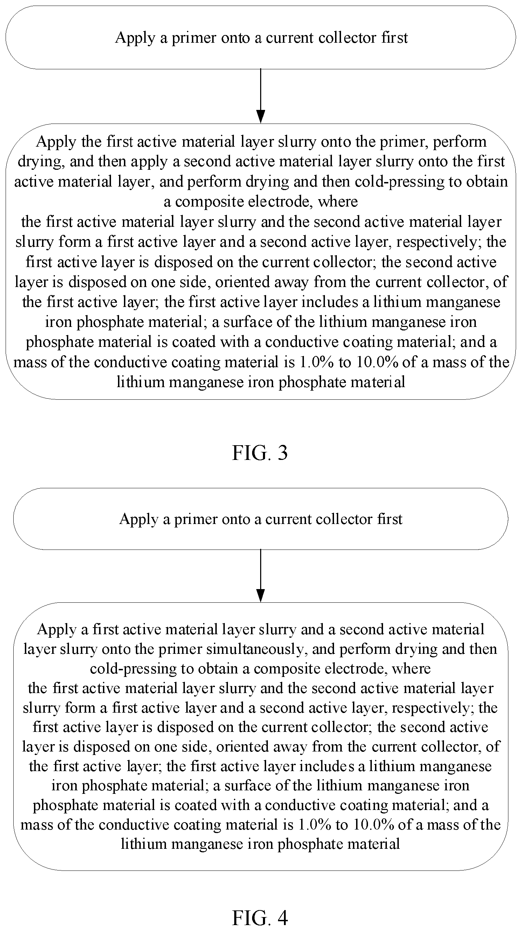

Further, as shown in FIG. 1 and FIG. 3, the step of "applying a first active material layer slurry and a second active material layer slurry onto a current collector, and performing drying and then cold-pressing to obtain a composite electrode" includes the following step: applying the first active material layer slurry onto the current collector, performing drying, and then applying the second active material layer slurry onto the first active material layer, and performing drying and then cold-pressing to obtain a composite electrode.

As shown in FIG. 3, the composite electrode is prepared by the following method: preparing a current collector, applying a first active material layer slurry onto the current collector, drying the first active material layer slurry by using a drying mechanism so that the first active material layer slurry becomes a first active layer, applying a second active material layer slurry onto the first active layer, drying the second active material layer slurry so that the current collector is coated with two active layers; cold-pressing the electrode plate by using a cold-pressing mechanism, and then cold-pressing the current collector to compact the active layers on the current collector to obtain a composite electrode of a specified thickness.

Further, as shown in FIG. 1 and FIG. 4, the step of "applying a first active material layer slurry and a second active material layer slurry onto a current collector, and performing drying and then cold-pressing to obtain a composite electrode" includes the following steps: applying the first active material layer slurry and the second active material layer slurry onto the current collector simultaneously, performing drying for the two slurries simultaneously, and, after completion of drying, performing cold-pressing to obtain a composite electrode.

Understandably, the two layers of slurries may be applied simultaneously by an appropriate process. An exemplary process is: using a coating machine, customizing a corresponding gasket, and extruding and applying two types of slurries onto the current collector simultaneously. By applying the first active material layer slurry and the second active material layer slurry simultaneously, this application can improve the coating efficiency, reduce the energy consumed by the drying, and simplify the two drying steps into one drying step. In addition, the coating process prevents an interface from being formed between the two layers. The two active layers fuse well with each other to form a more stable structure.

Further, as shown in FIG. 2, the process of applying a first active material layer slurry and a second active material layer slurry onto a current collector further includes the following step: applying a primer on the current collector first, and then applying the first active material layer slurry and the second active material layer slurry onto the primer.

The primer means a high-adhesion coating layer configured to increase the adhesion between the active material layer and the current collector.

In this step, a high-viscosity coating layer is applied onto the current collector first, and then the first active material layer slurry and the second active material layer slurry are applied, thereby increasing the bonding force between the active material and the substrate.

Further, in the step of performing cold-pressing to obtain a composite electrode after completion of drying, the drying temperature is 90 °C to 120 °C, the cold-pressing pressure is 20 tons to 40 tons, and the cold-pressing temperature is 15 °C to 35 °C.

In order to effectively remove the solvent in the slurry, the drying temperature is 90 °C to 120 °C, for example, 90 °C, 100 °C, 110 °C, or 120 °C. In order to compact the active layers to an appropriate density, the cold-pressing pressure is 20 tons to 40 tons, for example, 20 tons, 25 tons, 30 tons, 35 tons, 40 tons, or a value falling within a range formed by any two thereof. In addition, the cold-pressing performed at normal temperature simplifies the operation.

Further, this application further provides a battery, including a negative electrode plate, a positive electrode plate, a separator, and an electrolyte solution. The positive electrode plate is the composite electrode. The composite electrode employs all technical solutions of all the above embodiments, and therefore, at least achieves all the beneficial effects brought by the technical solutions of the above embodiments, the details of which are omitted here.

By virtue of high stability, a high energy density, cost-effectiveness, and other advantages of the composite electrode, the battery cell prepared from the composite electrode is superior, and the battery prepared from the composite electrode is more cost-effective.

Further, this application further provides an electrical device. The electrical device includes the battery. The battery employs all technical solutions of all the above embodiments, and therefore, at least achieves all the beneficial effects brought by the technical solutions of the above embodiments, the details of which are omitted here.

The electrical device employs the above cost-effective battery to improve the performance of the electrical device and increase the use value of the electrical device.

### Embodiments

### Embodiment 1

### Preparing a positive electrode plate

Preparing a first active layer: Dissolving carbon-coated lithium manganese iron phosphate (containing 1 wt% carbon) as a positive active material, conductive carbon black, PVDF as a binder, and N-methyl pyrrolidone (NMP) as a solvent at a mass ratio of 95: 2: 3: 100, and stirring well to obtain a homogeneous first active layer slurry; applying the first active layer slurry evenly onto a 15 µm-thick current collector aluminum foil, and then drying the slurry at 110 °C.

Preparing a second active layer: Dissolving a 5-series monocrystalline ternary material as a positive active material, conductive carbon black, PVDF as a binder, and N-methyl pyrrolidone (NMP) as a solvent at a mass ratio of 95: 2: 2: 100, and stirring well to obtain a homogeneous second active layer slurry; applying the second active layer slurry evenly onto the dried first active layer, and then drying the slurry at 110 °C. Cold-pressing the coated foil at a pressure of 20 tons to 40 tons to obtain a composite electrode with a coating thickness of approximately 100 µm.

The ratio of the thickness of the first active layer to the thickness of the second active layer is 5: 5.

### Preparing a negative electrode plate

Mixing well artificial graphite, conductive carbon black, and carboxymethyl cellulose (CMC) as a binder, and water as a solvent at a mass ratio of 95: 2: 3: 100 to form a homogeneous negative electrode slurry. Applying the negative electrode slurry evenly onto a 6 µm-thick current collector copper foil, and then drying the slurry at 100 °C. Cold-pressing the coated foil at a pressure of 20 tons to 40 tons to obtain an electrode plate with a coating thickness of approximately 60 µm.

### Preparing an electrolyte solution

Mixing ethylene carbonate (EC), polycarbonate (PC), and diethyl carbonate (DEC) at a volume ratio of 1: 1: 1, and dissolving LiPF₆ in the above solution homogeneously to obtain an electrolyte solution. In the electrolyte solution, the concentration of the LiPF₆ is 1 mol/L.

### Preparing a separator

Using a 12 µm-thick polyethylene (PE) film as a separator.

### Preparing a secondary battery

Stacking sequentially the positive electrode plate, separator, and negative electrode plate prepared in each of the above embodiments or comparative embodiments, and winding the stacked structure to obtain an electrode assembly, putting the electrode assembly into an outer package, injecting the prepared electrolyte solution, and performing steps such as sealing, static standing, chemical formation, and aging to obtain a secondary battery.

On the basis of Embodiment 1, with other conditions unchanged, the experimental parameters (as shown in Table 1) are changed to obtain the experimental data of Embodiments 2 to 11 and Comparative Embodiments 1 to 3.

### Testing the performance of a secondary battery

### Testing the cycle life of a battery

Taking five secondary batteries in each of the above embodiments and comparative embodiments, and testing the batteries in parallel. Charging each battery at a 0.33C rate at a normal temperature until the voltage reaches to 4.2 V, and then discharging the battery at a 0.33C rate until the voltage drops to 2.0 V Measuring the reversible capacity, denoted as C₀. Repeating the above charging and discharging steps until the discharge capacity Cₙ at the end of a cycle satisfies: Cₙ/C₀ ≤ 80%. The total number of cycles counted at the end of such cycle is denoted as X cycles.

The performance test results of the secondary batteries in each embodiment and comparative embodiment are shown in Table 1.

**Table 1 Battery performance test data (To be continued)**

| Group | First active layer | | Second active layer | Carbon coating weight of lithium manganese iron phosphate |
|---|---|---|---|---|
| | Content of lithium manganese iron phosphate | Content of ternary material | Content of ternary material | |
| Embodiment 1 | 100% | 0 | 100% | 1% |
| Embodiment 2 | 100% | 0 | 100% | 1.3% |
| Embodiment 3 | 100% | 0 | 100% | 2% |
| Embodiment 4 | 100% | 0 | 100% | 2.5% |
| Embodiment 5 | 100% | 0 | 100% | 5% |
| Embodiment 6 | 100% | 0 | 100% | 10% |
| Embodiment 7 | 100% | 0 | 100% | 5% |
| Embodiment 8 | 100% | 0 | 100% | 5% |
| Embodiment 9 | 80% | 20% | 100% | 5% |
| Embodiment 10 | 50% | 50% | 100% | 5% |
| Embodiment 11 | 20% | 80% | 100% | 5% |
| Comparative Embodiment 1 | 100% | 0 | 0 | 10% |
| Comparative Embodiment 2 | 50% | 50% | 0 | 5% |
| Comparative Embodiment 3 | 0 | 0 | 100% | 0 |

**Table 1 Battery performance test data (Continued)**

| Group | Compaction density | | Thickness of first active layer (µm) | Thickness of second active layer (µm) | Cycle life (cycles, 80% SOH) |
|---|---|---|---|---|---|
| | First active layer | Second active layer | | | |
| Embodiment 1 | 2.5 | 3.5 | 50 | 50 | 1500 |
| Embodiment 2 | 2.5 | 3.5 | 50 | 50 | 1450 |
| Embodiment 3 | 2.45 | 3.45 | 50 | 50 | 1400 |
| Embodiment 4 | 2.45 | 3.45 | 50 | 50 | 1360 |
| Embodiment 5 | 2.4 | 3.4 | 50 | 50 | 1300 |
| Embodiment 6 | 2.45 | 3.35 | 50 | 50 | 1000 |
| Embodiment 7 | 2.4 | 3.4 | 40 | 60 | 1350 |
| Embodiment 8 | 2.4 | 3.4 | 20 | 80 | 1400 |
| Embodiment 9 | 2.45 | 3.4 | 50 | 50 | 1250 |
| Embodiment 10 | 2.5 | 3.4 | 50 | 50 | 1100 |
| Embodiment 11 | 2.55 | 3.4 | 50 | 50 | 1000 |
| Comparative Embodiment 1 | 2.3 | / | 100 | 0 | 500 |
| Comparative Embodiment 2 | 2.5 | / | 100 | 0 | 800 |
| Comparative Embodiment 3 | / | 3.4 | 0 | 100 | 900 |

As can be seen from the data of embodiments and comparative embodiments in Table 1, the first active layer and the second active layer are included in the embodiments, and therefore, the cycle life is greater than that in the comparative embodiments. Specifically, as shown in Embodiments 1 to 6, the higher the carbon coating weight of the lithium manganese iron phosphate material, the lower the resistance, but the lower the energy density. In order to make both conductivity and energy density satisfactory, the carbon coating weight needs to be set to fall within an appropriate range. As shown in Embodiments 5, 7, and 8, the larger the thickness of the first active layer, the higher the resistance, and the lower the energy density. Therefore, the thickness of the first active layer needs to be set to fall within an appropriate range. As shown in Embodiments 9 to 11, the higher the content of the ternary material in the first active layer, the lower the resistance, the higher the energy density, but the shorter the cycle life.

As can be seen from Comparative Embodiments 1 to 3, when the active layer of the composite electrode is entirely the first active layer, or entirely the second active layer, the cycle life declines.

In summary, the composite electrode structure can effectively improve the comprehensive performance of the composite electrode.

Described above are merely some exemplary embodiments of this application without hereby limiting the patent scope of this application. Any and all equivalent structural variations made by using the content of the specification and the drawings of this application, and direct or indirect use of the technical solutions hereof in other related technical fields without departing from the conception of this application, still fall within the patent protection scope of this application.

## Claims

1. A composite electrode, wherein the composite electrode comprises a current collector, a first active layer, and a second active layer; the first active layer is disposed on the current collector; the second active layer is disposed on one side, oriented away from the current collector, of the first active layer; the first active layer comprises a lithium manganese iron phosphate material; at least a part of a surface of the lithium manganese iron phosphate material is coated with a conductive coating material; and a mass of the conductive coating material is 1.0% to 10.0% of a mass of the lithium manganese iron phosphate material.

2. The composite electrode according to claim 1, wherein the mass of the conductive coating material is 1% to 5% of the mass of the lithium manganese iron phosphate material.

3. The composite electrode according to claim 2, wherein the mass of the conductive coating material is 1.3% to 2.5% of the mass of the lithium manganese iron phosphate material.

4. The composite electrode according to claim 1, wherein the conductive coating material is a carbon material.

5. The composite electrode according to any one of claims 1 to 4, wherein the composite electrode further comprises a third active layer, and the third active layer is disposed between the current collector and the first active layer; and/or
the composite electrode further comprises a fourth active layer, and the fourth active layer is disposed between the first active layer and the second active layer.

6. The composite electrode according to any one of claims 1 to 4, wherein the second active layer is disposed on a lateral peripheral surface of the first active layer.

7. The composite electrode according to any one of claims 1 to 6, wherein the first active layer further comprises a ternary material, and the mass of the lithium manganese iron phosphate material is 20% to 80% of a total mass of the first active layer.

8. The composite electrode according to any one of claims 1 to 7, wherein an average particle diameter Dᵥ₅₀ of the lithium manganese iron phosphate material is 0.2 µm to 1 µm.

9. The composite electrode according to any one of claims 1 to 8, wherein a general structural formula of the lithium manganese iron phosphate material is LiMnₓFe_{y}M_{1-x-y}PO₄, wherein 0.2 ≤ x ≤ 0.8; 0.1 ≤ y ≤ 0.5; 0 ≤1 - x - y ≤ 0.2; and M represents a doping element, and optionally comprises at least one of Al, Cu, Mg, Zn, Ni, Ti, V, Zr, Co, Ga, Sn, Sb, Nb, or Ge.

10. The composite electrode according to any one of claims 1 to 9, wherein a thickness of the first active layer is 20% to 80% of a total thickness of the active layers.

11. The composite electrode according to any one of claims 1 to 10, wherein a compaction density of the second active layer is greater than a compaction density of the first active layer.

12. The composite electrode according to claim 11, wherein the compaction density of the second active layer is 3.0 g/cm³ to 4.5 g/cm³, and the compaction density of the first active layer is 2.2 g/cm³ to 3.0 g/cm³.

13. The composite electrode according to any one of claims 1 to 12, wherein the second active layer comprises at least one of a ternary material or lithium cobalt oxide.

14. The composite electrode according to claim 13, wherein an average particle diameter Dᵥ₅₀ of the ternary material or the lithium cobalt oxide comprised in the second active layer is 0.5 µm to 20 µm.

15. The composite electrode according to claim 13 or 14, wherein, when the second active layer comprises the ternary material, a general structural formula of the ternary material is LiNiₐCo_{b}N_{(1-a-b)}O₂, wherein N optionally comprises at least one of Mn, Zr, Al, B, Ta, Mo, W, Nb, Sb, or La, 0.35 ≤ a< 1.0, 0 ≤ b ≤ 0.35, and 0 ≤1 - a - b ≤ 0.35.

16. The composite electrode according to any one of claims 13 to 15, wherein, when the first active layer comprises the ternary material, the ternary material in the first active layer is identical to the ternary material in the second active layer.

17. The composite electrode according to claim 15, wherein the ternary material comprises at least one of a 5-series monocrystalline ternary material, a 5-series polycrystalline ternary material, a 6-series monocrystalline ternary material, a 6-series polycrystalline ternary material, a 7-series monocrystalline ternary material, a 7-series polycrystalline ternary material, an 8-series monocrystalline ternary material, an 8-series polycrystalline ternary material, a 9-series monocrystalline ternary material, a 9-series polycrystalline ternary material, or a cobalt-free ternary material.

18. The composite electrode according to any one of claims 1 to 17, wherein the first active layer comprises a first active material, a conductive agent, and a binder; the first active material comprises a lithium manganese iron phosphate material coated with a conductive coating material; and a mass of the lithium manganese iron phosphate material coated with the conductive coating material is 94% to 97% of a total mass of the first active layer; and/or
the second active layer comprises a second active material, a conductive agent, and a binder; the second active material comprises a ternary material; and a mass of the ternary material is 95% to 98% of a total mass of the second active layer.

19. A method for preparing a composite electrode, comprising the following steps:
applying a first active material layer slurry and a second active material layer slurry onto a current collector, and performing drying and then cold-pressing to obtain a composite electrode, wherein
the first active material layer slurry and the second active material layer slurry form a first active layer and a second active layer, respectively; the first active layer is disposed on the current collector; the second active layer is disposed on one side, oriented away from the current collector, of the first active layer; the first active layer comprises a lithium manganese iron phosphate material; at least a part of a surface of the lithium manganese iron phosphate material is coated with a conductive coating material; and a mass of the conductive coating material is 1.0% to 10.0% of a mass of the lithium manganese iron phosphate material.

20. The method for preparing a composite electrode according to claim 19, wherein the step of "applying a first active material layer slurry and a second active material layer slurry onto a current collector, and performing drying and then cold-pressing to obtain a composite electrode" comprises the following step:
applying the first active material layer slurry onto the current collector, performing drying, and then applying the second active material layer slurry onto the first active material layer, and performing drying and then cold-pressing to obtain a composite electrode.

21. The method for preparing a composite electrode according to claim 19, wherein the step of "applying a first active material layer slurry and a second active material layer slurry onto a current collector, and performing drying and then cold-pressing to obtain a composite electrode" comprises the following step:
applying the first active material layer slurry and the second active material layer slurry onto the current collector simultaneously, performing drying for the two slurries simultaneously, and, after completion of drying, performing cold-pressing to obtain a composite electrode.

22. The method for preparing a composite electrode according to any one of claims 19 to 21, wherein the process of applying a first active material layer slurry and a second active material layer slurry onto a current collector further comprises the following step:
applying a primer onto the current collector first, and then applying the first active material layer slurry and the second active material layer slurry onto the primer.

23. The method for preparing a composite electrode according to any one of claims 19 to 22, wherein, in the step of performing cold-pressing to obtain a composite electrode after completion of drying, a drying temperature is 90 °C to 120 °C, a cold-pressing pressure is 20 tons to 40 tons, and a cold-pressing temperature is 15 °C to 35 °C.

24. A battery, comprising a negative electrode plate, a positive electrode plate, a separator, and an electrolyte solution, wherein the positive electrode plate is the composite electrode according to any one of claims 1 to 18.

25. An electrical device, comprising the battery according to claim 24.
